Europäisches Patentamt

European Patent Office

Office européen des brevets

(19)

(11) Veröffentlichungsnummer: **0 017 762**
**B1**

## EUROPÄISCHE PATENTSCHRIFT

(12)

(45) Veröffentlichungstag der Patentschrift:
**07.09.83**

(51) Int. Cl.³: **F 16 D 51/46**

(21) Anmeldenummer: **80101321.0**

(22) Anmeldetag: **13.03.80**

(54) Abstützvorrichtung für eine Trommelbremse.

(30) Priorität: **19.04.79 DE 2915772**

(43) Veröffentlichungstag der Anmeldung:
**29.10.80 Patentblatt 80/22**

(45) Bekanntmachung des Hinweises auf die Patenterteilung:
**07.09.83 Patentblatt 83/36**

(84) Benannte Vertragsstaaten:
**AT BE CH FR GB IT NL SE**

(56) Entgegenhaltungen:
**DE-A-2 507 697**
**DE-B-2 161 559**
**DE-B-2 436 085**
**DE-C-970 819**
**DE-U-7 325 794**

(73) Patentinhaber: **Bergische Achsenfabrik Fr. Kotz &
Söhne, Am Ohlerhammer, D-5276 Wiehl 1 (DE)**

(72) Erfinder: **Gross, Wilhelm, Altes Land, D-5276 Wiehl (DE)**
Erfinder: **Mollerus, Bernd, Immen 30, D-5276 Wiehl (DE)**
Erfinder: **Ebbinghaus, Wilfried, Perkerstrasse 42,
D-5276 Wiehl (DE)**

(74) Vertreter: **Stenger, Alex, Dipl.-Ing. et al, Patentanwälte
Dipl.-Ing. A. Stenger Dipl.-Ing. W. Watzke Dipl.-Ing. H.J.
Ring Kaiser-Friedrich-Ring 70,
D-4000 Düsseldorf 11 (DE)**

**0 017 762**

Abstützvorrichtung für eine Trommelbremse

Die Erfindung betrifft eine Abstützvorrichtung für die beiden einer schwimmend angeordneten Zuspannvorrichtung abgewendeten Enden der Stege der Bremsbacken einer Trommelbremse für auflaufgebremste Fahrzeuganhänger mit einem beweglich an einem Bremsschild gelagerten Stützlager aus Bolzen und zugeordneter Kulisse, die unter einem spitzen Winkel zwischen Mitte Zuspannvorrichtung und Stützlager verläuft, welches bei Vorwärtsfahrt eine feste Abstützung für die Primärbacke bildet und bei Rückwärtsfahrt und Bremsung gegen die Wirkung einer Feder zum Ende der Primärbacke hin ausweicht, wobei sich der Abstand zwischen den Bremsbackenenden so weit verringert, daß eine Verspannung gegenüber der Bremstrommel unterbleibt.

Bei einem Gespann mit auflaufgebremstem Anhänger ist eine Trommelbremse erstrebenswert, die bei Vorwärtsfahrt das volle Bremsmoment erreicht und bei Rückwärtsfahrt ohne eine besondere Rückfahrsperre außer Betrieb gesetzt wird.

Eine bekannte Abstützvorrichtung (DE-B-2 161 559) mit einer als »Simplexbremse« konstruierten Trommelbremse ist so ausgebildet, daß das Stützlager für die der Zuspannvorrichtung abgewandten Enden der Stege der Bremsbacken aus einem an einem Führungskörper angelenkten Schwenknocken besteht, an dem die Stege beider Bremsbacken unmittelbar oder mittelbar mit unterschiedlichen Hebellängen angreifen, so daß der Schwenknocken bei Bremsung in Vorwärtsfahrt ein festes Stützlager für die Primärbacke bildet, während er bei Bremsung in Rückwärtsfahrt durch den Sekundärbacken verschwenkbar ist, wobei sich der Abstand zwischen den Enden der Bremsbacken so weit verringert, daß eine Verspannung gegenüber der Bremstrommel unterbleibt. Diese bekannte Abstützvorrichtung besitzt eine störanfällige Konstruktion, weil das Schwenklager, auf dem der Schwenknocken exzentrisch in bezug auf die Stützkräfte der Bremsbacken gelagert ist, nach einer gewissen Betriebsdauer korrodiert und dann den Schwenknocken blockieren kann, so daß die angestrebte Verminderung des Bremsmomentes bei Rückwärtsfahrt nicht mehr eintritt. Ein weiterer Nachteil der bekannten Abstützvorrichtung besteht darin, daß die Kennwerte (C*=Summe der Bremskräfte am Trommelumfang geteilt durch die Spannkraft einer Backe) verschieden groß — an der Primärbacke erheblich größer als an der Sekundärbacke — sind, so daß auch der Bremsbelagverschleiß durch die regelmäßig häufigeren Bremsungen in Vorwärtsfahrt unterschiedlich groß ist.

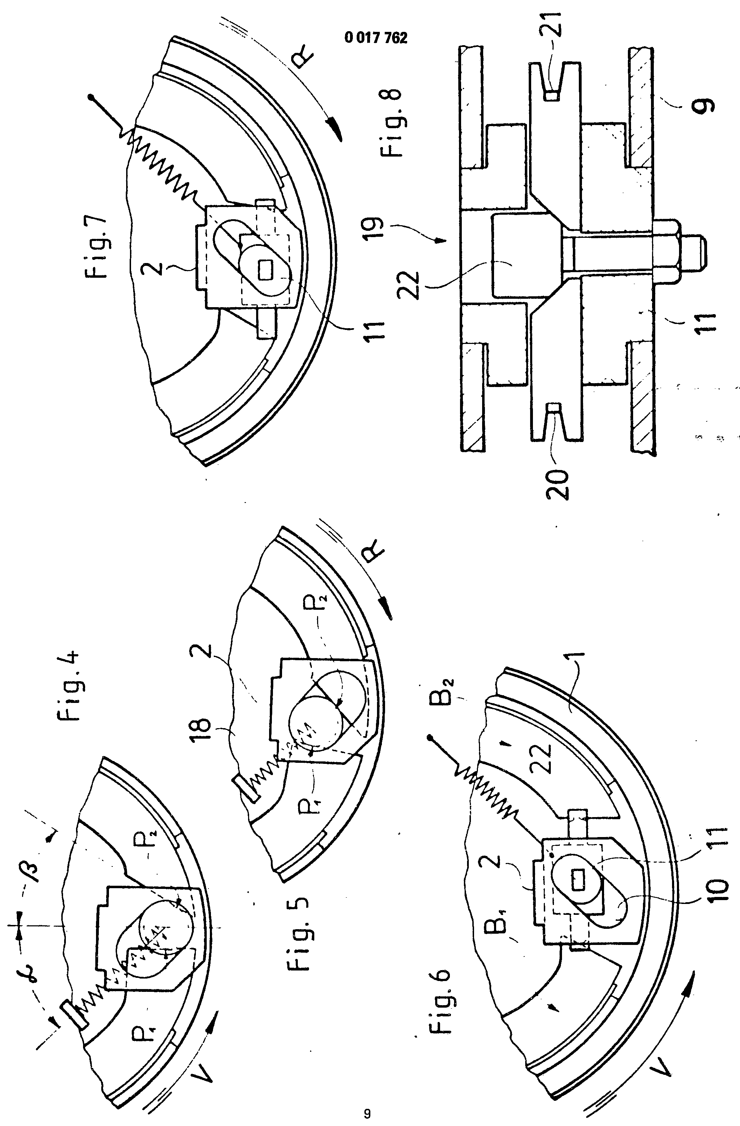

Bei einer anderen bekannten Abstützvorrichtung (DE-U-7 325 794) für als »Simplexbremse« konstruierte Trommelbremsen in auflaufgebremsten Fahrzeuganhängern ist das Stützlager in einem Ausführungsbeispiel (Fig. 4) trapezförmig ausgebildet und mit einem schrägverlaufenden Schlitz gegen die Wirkung einer Feder verschiebbar auf am Bremsschild befestigten Anschlägen angeordnet. Die Abstützenden der Stege der beiden Bremsbacken, die sich auf Schrägflächen des trapezförmigen Stützlagers abstützen, sind gleich und abgerundet ausgebildet. Bei Vorwärtsfahrt befindet sich das trapezförmige Stützlager in seiner oberen Stellung und bildet eine feste Abstützung für die Primärbacke. Bei Rückwärtsfahrt weicht das trapezförmige Stützlager gegen die Wirkung der Feder in seine untere Stellung aus, wobei sich der Abstand zwischen den Enden der Stege der Bremsbacken verringert, so daß eine Verspannung gegen die Bremstrommel unterbleibt. Diese bekannte Abstützvorrichtung hat mit der vorstehend beschriebenen Abstützvorrichtung gemeinsam den Nachteil, daß die Kennwerte der beiden Bremsbacken bei der regelmäßig häufigeren Bremsung in Vorwärtsfahrt unterschiedlich groß sind und deshalb auch die Bremsbeläge unterschiedlich stark verschleißen.

Ferner ist eine Abstützvorrichtung (DE-B-2 436 085) für eine als »Servobremse« konstruierte Trommelbremse bekannt, bei der das Stützlager aus einem schwimmend angeordneten Bolzen besteht, an dem sich die Stege der Bremsbacken mit Schrägflächen abstützen und der mit einem verstellbaren Widerlager nachgestellt werden kann, um den Bremsbelagverschleiß auszugleichen. Als »Servobremse« konstruierte Trommelbremsen haben, weil die Primärbacke sich auf der Sekundärbacke abstützt, einen sehr hohen Kennwert C*, der bei etwa 5 liegt. Außerdem hat diese bekannte Abstützvorrichtung den Nachteil, daß die Feststellbremse des abgestellten Fahrzeuganhängers gegen eine Feder an der Zuspannvorrichtung abgestützt ist, so daß ein am Hang abgestellter Fahrzeuganhänger sich in Bewegung setzen kann.

Davon ausgehend liegt der Erfindung die Aufgabe zugrunde, eine Abstützvorrichtung einfacher Konstruktion zu schaffen, mit der bei Vorwärtsfahrt das volle Bremsmoment und eine bessere Verteilung der Bremskräfte bzw. des Bremsbelagverschleißes auf die beiden Bremsbacken einer Simplexbremse erreicht werden kann und ohne besondere Rückfahrsperre bei Rückwärtsfahrt eine Bremsung praktisch unterbleibt.

Als technische Lösung dieser Aufgabe wird eine Abstützvorrichtung der eingangs beschriebenen Gattung vorgeschlagen, bei der der Kulissenwinkel zwischen 25 und 65° geneigt ist und die Enden der Stege der Bremsbacken als Schrägflächen ausgebildet sind, die einen spitzen Stegwinkel von 20 bis 60° einschließen, der kleiner als der Kulissenwinkel und asymmetrisch auf die beiden Stege verteilt ist, wobei der primärbackenseitige Stegwinkel größer als der sekundärbackenseitige Stegwinkel ist.

Bei einer praktischen Ausführungsform kann das Stützlager für die beiden Bremsbacken aus einem Bolzen bestehen, der gegen die Wirkung einer Feder in einer feststehenden Kulisse verschiebbar

2

angeordnet ist. Dabei besitzt der Bolzen zweckmäßig eine Führungsnut für den Eingriff der Schrägflächen der beiden Stege der Bremsbacken.

Eine nach dieser technischen Lehre ausgebildete Abstützvorrichtung hat aufgrund ihrer einfachen Konstruktion zunächst den Vorteil, daß sie praktisch wartungsfrei ist und auch nach längerer Betriebsdauer noch einwandfrei funktioniert. Ein weiterer Vorteil besteht darin, daß durch die asymmetrische Verteilung des Stegwinkels auf die Schrägflächen der Stege der beiden Bremsbacken die Kennwerte C* einander angenähert werden können, so daß eine gleichmäßigere Verteilung der Bremskräfte und damit ein gleichmäßigerer Bremsbelagverschleiß eintritt als es bei den bekannten Trommelbremsen bisher der Fall gewesen ist. Die erfindungsgemäß ausgebildete Abstützvorrichtung wird dadurch für eine Doppelfunktion nutzbar gemacht, nämlich in Vorwärtsfahrt für eine bessere Verteilung der Bremskräfte und damit des Bremsbelagverschleißes und bei Rückwärtsfahrt für die angestrebte Aufhebung des Bremsmomentes. Diese Vorteile gelten für eine als »Simplexbremse« konstruierte Trommelbremse, weil das aus einem beweglich gelagerten Bolzen gebildete Stützlager sowohl bei Vorwärtsfahrt als auch bei Rückwärtsfahrt eine feste Abstützung für die jeweils auflaufende Bremsbacke bildet.

Weitere Einzelheiten des Gegenstandes der Erfindung ergeben sich aus der nachfolgenden Beschreibung der zugehörigen Zeichnungen, in denen mehrere Ausführungsbeispiele einer erfindungsgemäß ausgeführten Abstützvorrichtung schematisch dargestellt sind. In den Zeichnungen zeigt

Fig. 1 eine Trommelbremse mit schwimmend angeordneter Zuspannvorrichtung und einer Auflaufbremse bei Vorwärtsfahrt in Ansicht von der Innenseite,

Fig. 2 dieselbe Trommelbremse entlang der Linie II-II in Fig. 1 geschnitten,

Fig. 3 dieselbe Trommelbremse bei Rückwärtsfahrt in Ansicht von der Innenseite,

Fig. 4 und 5 Ausschnitte einer Trommelbremse mit einer anderen Ausführungsform des Stützlagers bei Vorwärtsfahrt und bei Rückwärtsfahrt in Ansicht von der Innenseite,

Fig. 6 bis 8 eine Ausführungsform des Stützlagers mit einer in seinem Bolzen angeordneten Nachstellvorrichtung bei Vorwärtsfahrt und bei Rückwärtsfahrt in Ansicht von der Innenseite sowie im Schnitt.

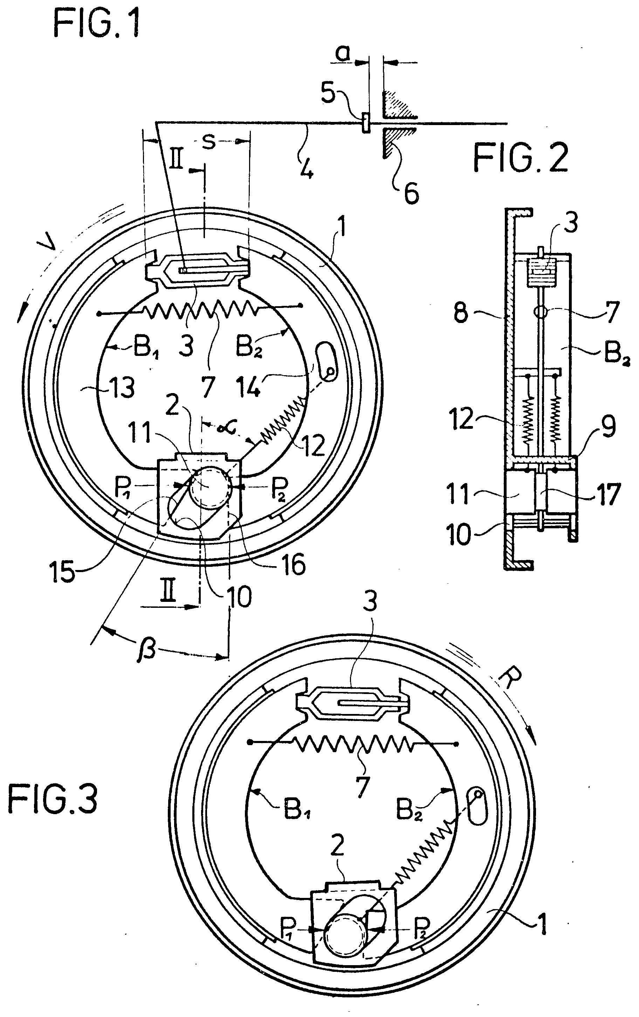

Die in den Fig. 1 bis 3 dargestellte Trommelbremse besteht im Prinzip aus einer Bremstrommel 1, zwei Bremsbacken B1 und B2, einem Stützlager 2, einem schwimmend angeordneten Spreizhebel 3, einem Seilzug 4 und zwei Anschlägen 5 und 6. Die Anschläge 5 und 6 gehören zur — im einzelnen nicht dargestellten — Auflaufeinrichtung. Der Abstand a zwischen den beiden Anschlägen 5 und 6 ist so bemessen, daß bei Vorwärtsfahrt V kein Anschlag zustande kommt und die volle Bremskraft auf den Spreizhebel 3 übertragen werden kann, während bei Rückwärtsfahrt R infolge des größeren Betätigungsweges ein Anschlag erfolgt, so daß keine oder nur eine geringere Bremskraft auf den Spreizhebel 3 übertragen wird und sich infolgedessen kein oder nur ein geringes Bremsmoment aufbauen kann.

Zwischen den beiden Bremsbacken B1 und B2 ist unterhalb des Spreizhebels 3 eine Zugfeder 7 angeordnet.

Das Stützlager 2 besteht aus einem am Bremsschild 8 befestigten Gehäuse 9 mit einem in einer Kulisse 10 verschiebbar angeordneten Bolzen 11, der von Rückholfedern 12 in seine Ausgangslage zurückgezogen wird. An den Enden der Stege 13 und 14 der Bremsbacken B1 und B2 sind Schrägflächen 15 und 16 ausgebildet, welche in eine Führungsnut 17 am Bolzen 11 eingreifen.

Die Kulisse 10 ist unter einem Kulissenwinkel $\alpha$ von beispielsweise 45° zu einer gedachten Verbindungslinie zwischen der Mitte des Stützlagers 2 und des Spreizhebels 3 geneigt angeordnet, während die Schrägflächen 15 und 16 der Stege 13 und 14 der beiden Bremsbacken B1 und B2 einen Stegwinkel $\beta$ zwischen sich bilden, der beispielsweise 30° beträgt und entweder an nur einer Bremsbacke ausgebildet oder auch auf beide Bremsbacken verteilt sein kann.

Bei Vorwärtsfahrt V wird der Bolzen 11 von der primärseitigen Bremsbacke B1 unter der Wirkung der Stützkraft P1 in die in der Fig. 1 dargestellte Ausgangslage geschoben, bei der die Schrägflächen 15 und 16 der Bremsbacken B1 und B2 ihren größten Abstand voneinander haben. Bei Rückwärtsfahrt R dagegen übernimmt die sekundärseitige Bremsbacke B2 die auflaufende Funktion, so daß ihre Stützkraft P2 größer wird und den Bolzen 11 in der Kulisse 10 in die in der Fig. 3 dargestellte Lage schieben kann, wobei die Schrägflächen 15 und 16 sich einander nähern und einen geringeren Abstand voneinander haben. Wenn gleichzeitig der Seilzug 4 mit seinem Anschlag 5 gegen den fahrgestellfesten Anschlag 6 gelaufen ist, können sich die beiden Bremsbacken B1 und B2 von der Bremstrommel 1 abheben, so daß eine Bremswirkung bei Rückwärtsfahrt praktisch nicht eintritt.

In den Fig. 4 und 5 ist eine Ausführungsform der Abstützvorrichtung dargestellt, bei der der Bolzen 11 gegen eine Rückdruckfeder 18 ausweichbar in der Kulisse 10 angeordnet ist, die aber in entgegengesetzter Richtung unter einem Kulissenwinkel $\alpha$ von 45° schräg verläuft. Im übrigen funktioniert diese Abstützvorrichtung genauso, wie es vorstehend anhand der Fig. 1 bis 5 beschrieben worden ist.

Der Bolzen 11 kann gleichzeitig auch mit einer Nachstellvorrichtung 19 (Fig. 8) versehen werden, die aus zwei Führungsstücken 20 und 21 sowie einem Keil 22 besteht, um den nach längerer Betriebszeit eingetretenen Bremsbelagverschleiß auszugleichen.

3

Für die Wirkung einer Trommelbremse, wie sie in Verbindung mit der beschriebenen Abstützvorrichtung benutzt wird, ist der Kennwert C* von besonderer Bedeutung. Der Kennwert C* bestimmt nämlich nicht nur die Verteilung der Bremskräfte auf die primär- und sekundärseitigen Bremsbacken B1 und B2, sondern gleichzeitig auch den an jeder Bremsbacke auftretenden Bremsbelagverschleiß. Anzustreben ist deshalb eine Konstruktion, bei der die Kennwerte $C_1$ und $C_2$ beider Bremsbacken bei Vorwärtsfahrt einander möglichst angenähert sind, damit neben einer gleichmäßigen Bremskraftverteilung auch ein möglichst gleichmäßiger Bremsbelagverschleiß eintritt. Durch eine geschickte Bemessung und Verteilung des Stegwinkels auf die beiden Schrägflächen 15 und 16 der Bremsbacken B1 und B2 ist es bei der beschriebenen Abstützvorrichtung möglich, die Kennwerte C* der auflaufenden und der ablaufenden Bremsbacke in Vorwärtsfahrt einander anzunähern und den Bremsbelagverschleiß möglichst gleichmäßig auf beide Bremsbacken zu verteilen.

In der nachfolgenden Tabelle sind für Stegwinkel von 20°, 30° und 40° bei unterschiedlicher Verteilung auf die Bremsbacken B1 und B2 die Kennwerte C* bei $\mu = 0{,}35$ (Reibung zwischen dem Bremsbelag und der Bremstrommel) ausgerechnet worden. Aus dieser Tabelle kann abgelesen werden, daß bei einer asymmetrischen Verteilung des Stegwinkels auf die beiden Bremsbacken eine Annäherung der Kennwerte C* bei Vorwärtsfahrt erreichbar ist. Gleichzeitig ist aus der Tabelle abzulesen, daß der Kennwert C* bei asymmetrischer Verteilung des Stegwinkels auf die beiden Bremsbacken bei Rückwärtsfahrt zunimmt, was für die Feststellbremse wichtig ist. Während die Annäherung der Kennwerte beider Bremsbacken bei Vorwärtsfahrt einer besseren Verteilung des Bremsbelagverschleißes zugute kommt, erlaubt die gleichzeitig erzielbare Steigerung des Kennwertes bei Rückwärtsfahrt, daß in der Auflaufbremse ein verhältnismäßig schwacher Federspeicher vorgesehen werden kann, um die Wirksamkeit der Feststellbremse zu erhalten, wenn der Anhänger am Berg abgestellt worden ist und beim Zurücklaufen die eingebaute Ausweichautomatik kurzzeitig in Funktion tritt, bis sie von dem Federspeicher wieder ausgeglichen worden ist.

| $\beta$ | $\beta_1$ | $\beta_2$ | Vorwärts | | | Rückwärts | | |
| | | | $C_1$ | $C_2$ | C* | $C_1$ | $C_2$ | C* |
|---|---|---|---|---|---|---|---|---|
| 20° | 20° | 0° | 1,1026 | 0,4862 | 1,5888 | 1,4214 | 0,434 | 1,8554 |
| 20° | 30° | −10° | 0,9265 | 0,51 | 1,4365 | 1,6 | 0,4056 | 2,0056 |
| 30° | 10° | 20° | 1,2744 | 0,434 | 1,7084 | 1,1026 | 0,4609 | 1,5635 |
| 30° | 20° | 10° | 1,1026 | 0,4609 | 1,5635 | 1,2744 | 0,434 | 1,7084 |
| 30° | 30° | 0° | 0,9265 | 0,4862 | 1,4127 | 1,4214 | 0,4056 | 1,827 |
| 30° | 40° | −10° | 0,7599 | 0,51 | 1,2699 | 1,6 | 0,386 | 1,986 |
| 40° | 10° | 30° | 1,2744 | 0,4056 | 1,68 | 0,9265 | 0,4609 | 1,387 |
| 40° | 30° | 10° | 0,9265 | 0,4609 | 1,387 | 1,2744 | 0,4056 | 1,68 |
| 40° | 40° | 0° | 0,7599 | 0,4862 | 1,2461 | 1,4214 | 0,386 | 1,807 |
| 40° | 50° | −10° | 0,6 | 0,501 | 1,101 | 1,6 | 0,358 | 1,958 |

In dieser Tabelle bedeuten:

$\beta$ = Stegwinkel insgesamt;

$\beta_1$ = Stegwinkel an der Primärbacke B1;

$\beta_2$ = Stegwinkel an der Sekundärbacke B2;

$$C^* = \frac{\Sigma\,\text{Bremskraft am Trommelumfang}}{\text{Spannkraft einer Bremsbacke}} = \frac{B1 + B2}{S};$$

C1 = Kennwert der Bremsbacke B1;

C2 = Kennwert der Bremsbacke B2.

**0 017 762**

Bezugszeichenliste:

| | | | |
|---|---|---|---|
| 1 | Bremstrommel | 12 | Rückholfeder |
| 2 | Stützlager | 13 | Steg |
| 3 | Spreizhebel | 14 | Steg |
| 4 | Seilzug | 15 | Schrägfläche |
| 5 | Anschlag | 16 | Schrägfläche |
| 6 | Anschlag | 17 | Führungsnut |
| 7 | Zugfeder | 18 | Rückdruckfeder |
| 8 | Bremsschild | 19 | Nachstellvorrichtung |
| 9 | Gehäuse | 20 | Führungsstück |
| 10 | Kulisse | 21 | Führungsstück |
| 11 | Bolzen | 22 | Keil |

| | |
|---|---|
| B1 | Bremsbacke |
| B2 | Bremsbacke |
| V | Vorwärtsfahrt |
| R | Rückwärtsfahrt |
| P1 | Stützkraft |
| P2 | Stützkraft |
| a | Abstand |
| $\alpha$ | Kulissenwinkel |
| $\beta$ | Stegwinkel |

## Patentansprüche

1. Abstützvorrichtung für die beiden einer schwimmend angeordneten Zuspannvorrichtung (3) abgewendeten Enden der Stege (13, 14) der Bremsbacken (B1, B2) einer Trommelbremse für auflaufgebremste Fahrzeuganhänger mit einem beweglich an einem Bremsschild (8) gelagerten Stützlager (2) aus Bolzen (11) und zugeordneter Kulisse (10), die unter einem spitzen Winkel zwischen Mitte Zuspannvorrichtung (3) und Stützlager (2) verläuft, welches bei Vorwärtsfahrt eine feste Abstützung für die Primärbacke (B1) bildet und bei Rückwärtsfahrt und Bremsung gegen die Wirkung einer Feder (12) zum Ende der Primärbacke hin ausweicht, wobei sich der Abstand zwischen den Bremsbackenenden so weit verringert, daß eine Verspannung gegenüber der Bremstrommel (1) unterbleibt, dadurch gekennzeichnet, daß der Kulissenwinkel ($\alpha$) zwischen 25 und 65° geneigt ist und daß die Enden der Stege (13, 14) als Schrägflächen (15, 16) ausgebildet sind, die einen spitzen Winkel ($\beta$) von 20 bis 60° einschließen, der kleiner als der Kulissenwinkel ($\alpha$) und asymmetrisch auf die beiden Stege (13, 14) verteilt ist, wobei der primärbackenseitige Stegwinkel ($\beta1$) größer als der sekundärbackenseitige Stegwinkel ($\beta2$) ist.

2. Abstützvorrichtung nach Anspruch 1, dadurch gekennzeichnet, daß das Stützlager (2) aus einem Bolzen (11) besteht, der gegen die Wirkung einer Feder (12, 18) in einer feststehenden Kulisse (10) verschiebbar angeordnet ist.

3. Abstützvorrichtung nach Anspruch 1, dadurch gekennzeichnet, daß der Bolzen (11) eine Führungsnut (17) für die Schrägflächen (15, 16) der Stege (13, 14) besitzt.

## Claims

1. Support device for the two ends of the opposed webs (13, 14) of the brake shoes (B1, B2) of a drum brake for vehicle trailers with overrun brakes which are spaced from a floating actuating device (3), with a support bearing movably mounted on a brake plate (8) in the form of a pin (11) and an associated slotted link (10) which extends at an acute angle between the centre of the actuating device (3) and the support bearing, which during forwards motion provides a strong support for the primary shoe (B1) and during reverse motion and braking withdraws to the end of the primary shoe against the action of a spring (12), the spacing between the ends of the brake shoes being then reduced to such an extent that expansion with respect to the brake drum (1) hardly occurs characterised in that the slotted link angle ($\alpha$) is inclined at between 25 and 65°, and the ends of the webs (13, 14) are formed as inclined surfaces (15, 16) which define an acute angle ($\beta$) of between 20 and 60° which is smaller than the slotted link angle ($\alpha$) and is divided a symmetrically about the two webs (13, 14), the web angle (B1) on the primary shoe side being greater than the web angle (B2) on the secondary shoe side.

2. Support device as claimed in claim 1, characterised in that the support bearing (2) consists of a pin (11), which is disposed slidably in a fixed slotted.link (10) against the action of a spring (12, 18).

3. Support device as claimed in claim 1, characterised in that the pin (11) has a guide groove (17) for the inclined surfaces (15, 16) of the web (13, 14).

5

**Revendications**

1. Dispositif d'appui pour les deux extrémités, qui sont opposées aux dispositifs d'application (3) disposés à flottement, des segments (13, 14) des mâchoires de frein (B1, B2) d'un frein à tambour pour des remorques à freins à inertie, comportant un palier d'appui (2) disposé de manière mobile sur une plaque de frein (8) et constitué d'un boulon (11) et d'une coulisse associée (10) qui s'étend sous un angle aigu entre le milieu du dispositif d'application (3) et le palier d'appui (2) qui, lors de la marche avant, constitue un appui fixe pour la mâchoire primaire (B1) et qui, lors de la marche arrière et du freinage, s'étend jusqu'à l'extrémité de la mâchoire primaire à l'encontre de l'effet d'un ressort (12), la distance entre les extrémités de mâchoires de frein diminuant à un point tel qu'il n'y a plus de déformation vis-à-vis du tambour (1) de frein, caractérisé par le fait que, l'angle de coulisse ($\alpha$) est incliné d'un angle compris entre 25 et 65° et en ce que les extrémités des segments (13, 14) sont réalisées sous forme de faces obliques (15, 16) qui délimitent un angle aigu ($\beta$) compris entre 20 et 60° qui est plus petit que l'angle de coulisse ($\alpha$) et qui est réparti de manière assymétrique sur les deux segments (13, 14), l'angle de segment ($\beta 1$) du côté de la mâchoire primaire étant supérieur à l'angle de segment ($\beta 2$) du côté de la mâchoire secondaire.

2. Dispositif d'appui selon la revendication 1, caractérisé en ce que le palier d'appui (2) est constitué d'un boulon (11) qui est disposé à coulissement contre l'effet d'un ressort (12, 18) dans une coulisse (10) fixe.

3. Dispositif d'appui selon la revendication 1, caractérisé en ce que le boulon (11) possède une rainure de guidage (17) pour les faces obliques (15, 16) des segments (13, 14).

FIG.1

FIG.2

FIG.3

Fig. 7

Fig. 8

Fig. 4

Fig. 5

Fig. 6